(19) **Europäisches Patentamt**

**European Patent Office**

**Office européen des brevets**

(11) **EP 0 878 333 B1**

(12) **FASCICULE DE BREVET EUROPEEN**

(45) Date de publication et mention
de la délivrance du brevet:
**27.08.2003 Bulletin 2003/35**

(51) Int Cl.⁷: **B60G 17/015**, B60G 17/02,
F16F 15/067

(21) Numéro de dépôt: **98108084.9**

(22) Date de dépôt: **04.05.1998**

(54) **Dispositif de suspension comportant un correcteur de ressort**

Aufhängungsvorrichtung mit Federkorrektureinheit

Suspension device with spring correction unit

(84) Etats contractants désignés:
**BE CH DE ES FR GB IT LI LU PT SE**

(30) Priorité: **16.05.1997 FR 9706225**

(43) Date de publication de la demande:
**18.11.1998 Bulletin 1998/47**

(73) Titulaire: **Conception et Développement Michelin**
**1762 Givisiez (CH)**

(72) Inventeurs:
• **Charaudeau, Jean-Jacques**
**1741 Cottens (CH)**
• **Laurent, Daniel**
**1723 Marly (CH)**
• **Linda, Jean-Louis**
**1635 La Tour-de-Treme (CH)**

• **Varenne, Pierre**
**1740 Neyruz (CH)**

(74) Mandataire: **Bauvir, Jacques**
**Michelin & Cie,**
**Service SGD/LG/PI-LAD**
**63040 Clermont-Ferrand Cedex 09 (FR)**

(56) Documents cités:
**EP-A- 0 343 809       EP-A- 0 436 870**
**DE-A- 4 202 091       US-A- 5 060 959**
**US-A- 5 091 679       US-A- 5 301 111**
**US-A- 5 434 782       US-A- 5 740 039**

• **PATENT ABSTRACTS OF JAPAN vol. 016, no.**
**335 (M-1283), 21 juillet 1992 & JP 04 100717 A**
**(MITSUBISHI MOTORS CORP), 2 avril 1992**

## Description

La présente invention concerne le domaine des suspensions. En particulier, elle se rapporte à la suspension de véhicules, par exemple des voitures de tourisme. Plus précisément, elle se rapporte aux moyens utilisés pour permettre le débattement entre deux points (un point suspendu, par exemple lié à la caisse ou au châssis d'une voiture, et un point non suspendu, par exemple solidaire d'un bras de suspension ou d'un porte-roue) tout en s'efforçant d'amoindrir les variations de la force développée par la suspension, vues par le point suspendu.

On sait que la suspension d'un véhicule comporte des dispositions constructives par lesquelles on guide le déplacement d'une roue ou des roues d'un essieu par rapport au châssis (ou bien par rapport à la caisse du véhicule), et elle comporte aussi des moyens procurant une certaine flexibilité et un certain amortissement à la suspension. Par commodité, on peut désigner ces derniers moyens par la fonction ressort et la fonction amortissement. Plus généralement, ces moyens agissent sur les mouvements existant entre la roue et le châssis. Faisons remarquer en préalable que, pour simplifier l'exposé, nous ne considérerons tout au long de ce mémoire que la suspension dite verticale d'un véhicule. Ce contexte particulier n'est bien sûr pas limitatif, même si cela constitue un domaine de prédilection de l'invention.

Un ressort est calculé pour supporter la charge du véhicule tout en maintenant une garde au sol suffisante au véhicule. Grâce à la fonction d'amortissement, les roues équipées de pneumatiques tendent à rester toujours en contact avec la route lorsque la suspension est sollicitée par les irrégularités de la route. Un amortisseur empêche l'entretien des oscillations survenant à la suite d'une perturbation, notamment les oscillations de la roue elle-même, que le pneumatique ne peut à lui seul atténuer suffisamment rapidement.

On sait que la conception d'une suspension se caractérise par la recherche d'un compromis entre des objectifs qui ont la réputation d'être au moins dans une large mesure contradictoires : le confort et la tenue de route. De nombreux efforts sont déployés pour trouver un compromis toujours meilleur. L'état de la technique connaît des suspensions dites actives ou semi-actives, dont le pilotage est maintenant rendu possible par les progrès de l'électronique. Dans de telles suspensions, des ordres sont transmis par voie électrique ou électro-hydraulique pour modifier en temps réel les caractéristiques de flexibilité et/ou d'amortissement de la suspension. Cela conduit à ajouter, aux dispositifs mécaniques ou pneumatiques ou hydrauliques classiques, un étage de régulation électronique avec ses capteurs et ses moyens de calcul, et des électrovannes ou des servovalves, pour transmettre aux organes mécaniques assurant la fonction de suspension proprement dite les ordres de changement de caractéristiques. Il s'agit par exemple de provoquer l'ouverture ou la fermeture d'un clapet dans un amortisseur, pour modifier la dissipation d'énergie qu'il provoque, ou de mettre en ou hors circuit un accumulateur hydropneumatique supplémentaire, pour modifier la raideur globale du ressort.

Malheureusement, cela conduit à rendre bien plus complexes les composants de base de la suspension que sont les ressorts et les amortisseurs. En outre, alors que l'on souhaite que la suspension puisse adapter instantanément ses caractéristiques aux modifications des conditions de roulage que rencontre le véhicule, les électrovannes ou servovalves sont responsables d'un retard au changement d'état effectif des caractéristiques de suspension, dû à leur temps de réponse. L'utilisation d'électrovannes ou de servovalves apporte donc une limite technologique qui ne permet pas d'atteindre la vitesse de réaction souhaitée. Il paraît difficile d'espérer des temps de réponse inférieurs au centième de seconde.

C'est la raison pour laquelle les concepteurs de suspensions actives ou semi-actives développent des stratégies de régulation capables d'anticiper : le pilotage de la suspension se base sur des mesures de vitesse du véhicule, d'angle au volant et/ou vitesse de rotation du volant, de pression de freinage et/ou vitesse d'augmentation de la pression de freinage, degré et/ou vitesse d'enfoncement de la pédale d'accélérateur. Ces paramètres permettent d'anticiper autant que possible les probables mouvements de caisse que causeront les actions du conducteur du véhicule, grâce à l'observation expérimentale du comportement du véhicule.

Même si cette anticipation peut présenter un certain intérêt, elle reste insuffisante pour tenir rapidement compte des perturbations extérieures à la conduite du véhicule, notamment les perturbations venant du caractère bosselé du sol sur lequel on roule. C'est pourquoi on a déjà cherché à piloter plus directement par l'électricité les caractéristiques propres d'un organe de suspension. Malheureusement, les possibilités technologiques de modifier ainsi l'effort introduit par un amortisseur ne sont pas nombreuses. Et l'on ne connaît pas de moyen simple d'ajuster directement la raideur d'un ressort par un courant électrique ou une tension électrique ou un champ électromagnetique. Il n'en reste pas moins vrai que, fondamentalement, une suspension comporte un ressort. Il est donc souhaitable de pouvoir agir aussi sur la fonction ressort afin de pouvoir améliorer le confort tout en préservant la sécurité de roulement, c'est-à-dire la tenue de route (donc la permanence du contact de la roue sur le sol, même dans les situations extrêmes).

On a déjà aussi essayé d'adopter des moyens d'action sur la suspension qui se prêtent mieux au pilotage par voie électrique. Le brevet US 5 060 959 montre un actionneur électrique agissant en parallèle d'un ressort pneumatique pour contrôler les mouvements d'une roue de véhicule. Cependant, le pilotage évoqué fait appel à de nombreux capteurs de forces, de position, ce qui en rend l'exploitation pratique quelque peu problématique. En outre, il apparaît que l'actionneur électrique se comporte toujours en amortisseur classique dans les phases de détente de la suspension, puisqu'il freine le mouvement de suspension. Une telle approche n'est pas satisfaisante pour améliorer le confort des véhicules.

L'état de la technique se heurte donc au choix des paramètres de pilotage, à la correcte exploitation d'une multitude de signaux dont on pense avoir besoin pour appréhender correctement l'attitude d'un véhicule et finalement, bien que les progrès du pilotage par voie électrique aient laissé espérer depuis plusieurs années un progrès dans le domaine de la suspension des véhicules, on se heurte encore à la maîtrise des caractéristiques d'une suspension active.

L'invention propose une approche qui, ayant observé qu'un amortisseur classique est toujours nuisible au confort, se départit des tentatives consistant à vouloir piloter de façon plus élaborée l'amortissement de la suspension.

Dans une suspension, on uilise un dispositif de suspension comportant une liaison élastique montée entre lesdits points suspendu et non suspendu, conçue pour exercer entre lesdits points une force de sustentation d'une valeur nominale prédéterminée. La liaison élastique est essentiellement constituée par un ressort de raideur K et de longueur prédéterminée sous une charge de référence, et par un vérin électrique réversible, agissant en parallèle du ressort.

La méthode de contrôle selon l'invention, assurant le contrôle du débattement entre un point suspendu et un point non suspendu, d'un dispositif de suspension comportant une liaison élastique montée entre lesdits points suspendu et non suspendu, ladite liaison élastique comprenant un ressort et comportant un vérin électrique réversible; agissant en parallèle du ressort, ladite liaison élastique ayant une distance de base entre ledit point suspendu et ledit point non suspendu pour laquelle ledit ressort compense exactement la charge statique agissant sur le dispositif de suspension, ladite méthode comportant un calcul du courant à appliquer audit vérin électrique selon une période d'échantillonnage prédéterminée pour contrôler le débattement entre lesdits points suspendu et non suspendu, caractérisée en ce que, à partir d'une variation observée de la distance entre lesdits points suspendu et non suspendu causée par un déplacement du point suspendu par rapport au point non suspendu, quel que soit le sens du déplacement, le courant calculé est tel que le vérin électrique développe un effort orienté comme le déplacement, l'amplitude dudit effort :

- étant une fonction de la variation de ladite distance de base,
- et étant progressivement réduite de façon à annuler ledit effort en un certain nombre de périodes d'échantillonage représentative d'une période de temps de relaxation.

Le rôle du vérin électrique est essentiellement d'imposer au ressort de suivre aussi fidèlement que possible les variations de distance entre point suspendu et point non suspendu, quel que soit le sens de ces variations (compression et détente). Si cette condition est réalisée, la variation d'effort sur la caisse est nulle. S'il n'y a pas de variation d'effort, il n'y a pas d'accélération, donc pas de mouvement de caisse verticalement, donc le confort est très grand. Le pilotage du vérin électrique permet d'offrir un pilotage actif de la suspension. En fait, le vérin électrique agit en permanence en correcteur de ressort afin d'écrêter radicalement les variations de force que sinon le ressort imposerait à la masse suspendue sous l'action de perturbations extérieures. La fonction de ce correcteur de ressort consiste à modifier l'effort de réaction qu'aurait naturellement développé le ressort en réponse à une perturbation, en appliquant une stratégie de correction visant à procurer le meilleur confort possible. Le correcteur de ressort est capable de modifier en temps réel la raideur globale de la suspension pour s'approcher de la situation idéale que conférerait un ressort à pente nulle.

Selon une forme de réalisation, on peut utiliser un ressort classique, dimensionné pour reprendre la charge statique d'un véhicule. La valeur K est dans ce cas particulier constante. Le ressort développe une force de réaction sur la caisse du véhicule. Grâce au ressort, notons que, sur sol mathématiquement plan et en dehors de toute perturbation venant d'une manoeuvre du véhicule, il n'est besoin d'aucune action du vérin électrique pour porter la charge du véhicule, donc pour maintenir l'attitude et l'assiette de la caisse. Ainsi, la suspension ne consomme pas d'énergie en régime établi.

Pour assurer un excellent confort de roulage, il conviendrait que la caisse subisse aussi peu d'accélération verticale que possible, même si l'on roule sur sol bosselé. Autrement dit, il conviendrait que la force que le sol exerce sur le véhicule soit indépendante de la position de la roue par rapport à la caisse du véhicule. Le principe de l'invention consiste à, au moyen d'un vérin électrique agissant en parallèle du ressort, corriger en permanence la réaction due au ressort par un effort développé par le vérin électrique, d'amplitude et de signe tels que la réaction globale de la suspension sur la caisse varie aussi peu que possible. Autrement dit, la caractéristique globale résultant des effets combinés du ressort et du correcteur tend à toujours être celle d'un ressort à pente nulle, aussi bien à la détente qu'à la compression. Dans ce cas, le dispositif se comporte en suiveur de profil pur. En appelant K la valeur instantanée de la raideur du ressort et Z la variation de la distance entre point suspendu et non suspendu, l'alimentation électrique du vérin électrique est telle qu'il développe un effort $F = KZ$ (c'est à dire que l'effort est proportionnel au produit de la raideur du ressort par la variation de la distance ; au besoin, on peut ajouter un terme qui permet de tenir compte de l'inertie des masses non suspendues, mais ce terme est de second ordre et est bien entendu d'autant plus négligeable que ladite inertie est faible). Ainsi, pendant la phase de suivi du déplacement par le vérin, le vérin électrique compense la variation de la force exercée par le ressort à cause de ladite variation de distance, en vue de maintenir la nouvelle position relative entre point suspendu et point non suspendu telle qu'elle est imposée par lesdites sollicitations extérieures.

Sans apporter de correctif à l'accompagnement expliqué ci-dessus, la suspension serait instable, car incapable de s'adapter correctement aux variations de charge statique du véhicule ou incapable de retrouver la position d'équilibre du ressort définie par la charge statique suite à des modifications permanentes du niveau du profil de la route. En outre, elle consommerait constamment de l'énergie pour maintenir l'effort dans le vérin électrique. C'est pourquoi il convient d'introduire une relaxation de l'effort développé dans le vérin électrique. Cette relaxation intervient avec une constante de temps bien plus grande que la réaction en suiveur de profil pur. Cela crée une tendance permanente du vérin électrique au retour à la position initiale.

L'invention sera mieux comprise par la description qui va suivre, d'un exemple donné à titre non limitatif, en se référant au dessin annexé sur lequel :

- la figure 1 montre un véhicule équipé d'une suspension,
- les figures 2 et 3 illustrent le fonctionnement d'une telle suspension,
- la figure 4 est un bloc-diagramme expliquant un aspect du pilotage du vérin électrique.

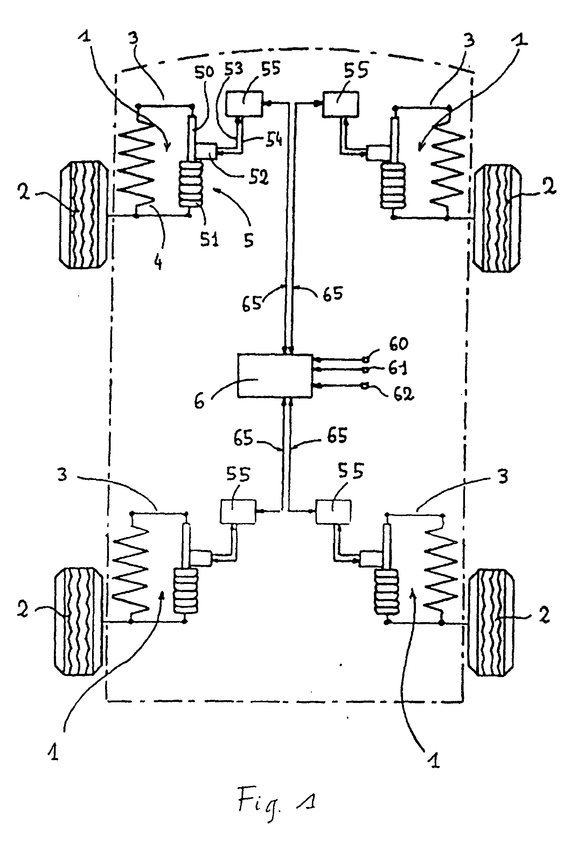

On voit à la figure 1 un véhicule équipé de quatre liaisons élastiques 1 montées entre les roues 2 et la caisse 3. Chaque liaison élastique comporte un ressort hélicoïdal 4 et un vérin électrique 5 monté en parallèle. Le vérin électrique 5 est constitué par une crémaillère 50 coulissant dans un fourreau 51. Un moteur électrique 52 est fixé par sa carcasse au fourreau 51. Un pignon (non représenté) est monté sur le rotor du moteur et est engrené sur la crémaillère 50.

Dans une variante tout particulièrement intéressante, on utilise un moteur électrique 52 de type synchrone auto piloté, à inducteur à aimants permanents. Ce type de moteur comporte par construction des capteurs de position du rotor utilisés pour en assurer le pilotage, quelle que soit l'application. Utilisés dans cette application, ces capteurs mesurent en fait la variation de distance entre la roue 2 et la caisse 3. On peut effectuer le pilotage de la suspension d'une roue isolément, sans autre capteur que ceux dont est pourvu le moteur 52. On a vu que l'effort F à développer dans le vérin électrique est proportionnel à Z (ladite variation de distance). Or on sait que, pour obtenir un effort donné dans un vérin électrique 5 tel que décrit ci-dessus, il faut que le moteur développe un couple déterminé. Or on sait que le couple est proportionnel au courant injecté dans le moteur. Le pilotage pour obtenir un effort prédéterminé revient donc à piloter le courant à injecter dans le moteur.

L'information venant des capteurs internes au moteur parvient à une unité 55 de pilotage individuel de roue, via le canal 53. L'unité 55 comporte un injecteur de courant et les moyens électroniques pour exploiter l'information venant desdits capteurs internes au moteur en fonction d'une stratégie de pilotage choisie, à savoir le comportement d'abord en suiveur de profil qui oblige le vérin électrique 5 à développer un effort, puis survenance d'une relaxation de l'effort du vérin électrique 5. De la sorte, l'unité 55 injecte le courant adéquat dans le moteur 52 par le câble électrique 54. Le moteur 52 développe alors un effort dans le sens adéquat.

Pour expliciter le pilotage du vérin électrique 5, supposons d'abord que l'on cherche à ce que la caisse reste parfaitement immobile, c'est-à-dire ne subisse aucune accélération verticale, quelle que soit la sollicitation en provenance des roues. En pratique, si la roue rencontre un obstacle comme une dénivellation formant une bosse, la roue va avoir tendance à monter avant que, en raison de son inertie, la caisse du véhicule ne suive ce mouvement ascendant. Dès que l'on détecte que la distance entre la roue et le châssis ou caisse du véhicule diminue, on actionne le vérin électrique pour qu'il comprime le ressort, en consommant l'énergie nécessaire à cet effet. Tout se passe comme si le vérin électrique suivait le mouvement ascendant de la roue. Cette réaction du vérin électrique peut être ultra rapide. Elle ne demande que le temps technologique d'établissement du courant requis dans le vérin électrique, soit de l'ordre de la milliseconde, additionné du temps de calcul de l'unité de pilotage 55. Bien entendu, si la distance entre caisse et roue a tendance à augmenter, le vérin électrique agit au contraire pour contribuer à éloigner la roue de la caisse en consommant éventuellement l'énergie nécessaire à cet effet, c'est-à-dire pour pousser la roue par exemple dans le fond d'une ornière. Appelons cette réaction du vérin électrique une réaction de suivi du profil de la route, c'est à dire une réaction d'accompagnement des mouvements entre points suspendu et non suspendu.

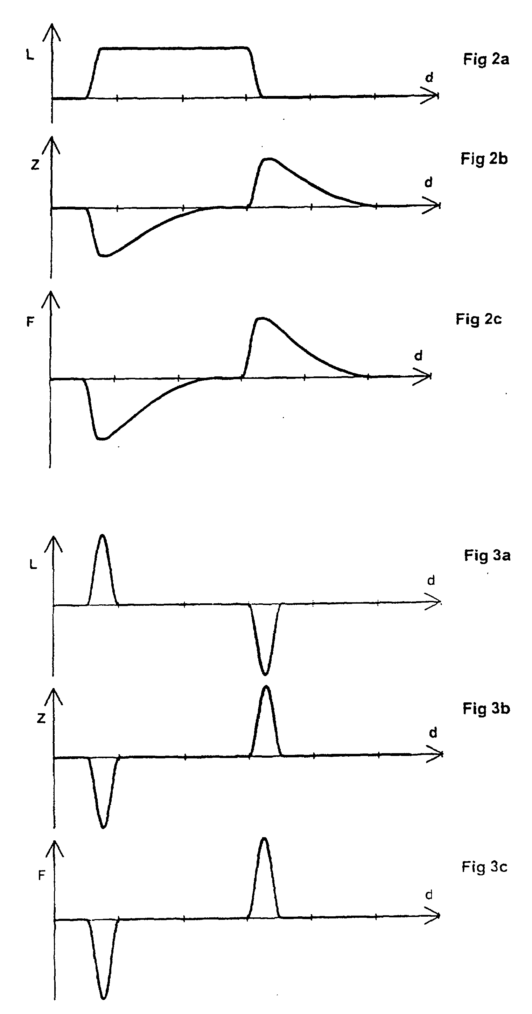

Aux figures 2a et 3a, on a représenté le profil de la route. Les abscisses « d » sont le déplacement le long de la route. En tant que droite, l'axe horizontal représente une référence déterminée par le niveau moyen de la route. Les ordonnées « L » sont l'écart par rapport à ce niveau moyen. Dans ce repère, une courbe représente donc l'évolution de la position exacte de la surface de la route en fonction du cheminement le long de la route. A la figure 2a, on a représenté une surélévation de grande longueur, qu'un véhicule mettrait plusieurs secondes à franchir. A la figure 3a, on a représenté une bosse et ornière. Aux figures 2b et 3b, les abscisses sont celles des figures 2a et 3a, les ordonnées « Z » représentant le déplacement relatif entre point suspendu et non suspendu, supposé être négatif pour une compression de la suspension et positif pour une détente. Aux figures 2c et 3c, les abscisses sont celles des figures 2a et 3a, les ordonnées « F » représentant l'effort délivré par le vérin électrique 5, supposé être positif pour une décompression du ressort 4 et négatif pour une surcompression du ressort 4.

On voit à la partie gauche des figures 2 que, dès que la roue rencontre l'obstacle, il s'établit dans le vérin électrique 5 un effort qui comprime le ressort 4, ce qui permet à la roue 2 de monter sur l'obstacle sans que la caisse 3 subisse de variation d'altitude par rapport au niveau moyen du sol. C'est la phase de suivi de la variation de position relative entre point suspendu et point non suspendu. Au moins au début de la réaction d'accompagnement, le vérin électrique 5 peut être piloté pour surcompenser le mouvement, afin d'annuler le retard dû à la détection. Notons cependant que ce retard est inférieur d'au moins un ordre de grandeur au temps de réaction technologique des électrovannes ou des servovalves des suspensions hydrauliques ou pneumatiques actives ou semi-actives.

Ensuite intervient la relaxation de l'effort développé dans le vérin électrique. On voit aux figures 2, en continuant à se déplacer selon les abscisses d, que dès que la roue 2 se trouve par dessus la dénivellation, l'effort du vérin électrique 5 retourne vers zéro, selon une constante de temps choisie de telle sorte que la variation de position relative entre point suspendu et non suspendu qui en résulte déplace la caisse vers le haut, pour retrouver la position d'équilibre du ressort 4, fonction de la charge statique du véhicule, et ceci suffisamment lentement pour ne pas pénaliser le confort.

A la partie droite des figures 2, on a illustré ce qui se passe si la roue 2 descend une dénivellation de même importance. Le fonctionnement est symétrique dans son principe. Le vérin électrique 5 oblige la roue 2 à rester plaquée au sol, en développant une force qui décomprime le ressort 4, c'est à dire qui, tout comme lors d'une phase de compression, écarte le ressort 4 de sa position d'équilibre dictée par la charge statique du véhicule, et ainsi pousse et fait descendre la roue 2 dans le fond de l'ornière ou en bas de la dénivellation.

Ensuite, et là encore de façon symétrique à ce qui se produit lorsque la sollicitation initiale provoque une surcompression du ressort 4, après la phase de décompression du ressort 4 intervient la relaxation de l'effort développé dans le vérin électrique 5. On voit aux figures 2, en continuant à se déplacer selon les abscisses d, que dès que la roue se trouve en bas de la dénivellation, l'effort du vérin électrique 5 retourne vers zéro, selon la même constante de temps de relaxation, pour retrouver la position d'équilibre du ressort 4, fonction de la charge statique du véhicule, et ceci suffisamment lentement pour ne pas pénaliser le confort.

Par l'effet combiné du comportement dominant en "suiveur de profil" puis de la relaxation, la suspension absorbe les irrégularités de la route en consommant pour cela une certaine quantité d'énergie électrique, tout en tendant en permanence et progressivement à revenir à son état d'équilibre initial où la consommation d'énergie électrique est annulée.

Aux figures 3, les variations imposées par le profil de la route s'inversent si rapidement que le phénomène de relaxation n'a pas le temps d'intervenir. Le système agit en suiveur de profil pur.

L'unité de pilotage 55 comporte des moyens de calcul chargés de programmes adéquats pour mettre en oeuvre cette stratégie de pilotage. La valeur de la raideur K du ressort est mémorisée dans l'unité 55 (ici, c'est un paramètre constant), et ladite unité 55 reçoit depuis les capteurs internes au moteur, via le canal 53, l'information sur la position instantanée mesurée "$Z_{im}$" du vérin électrique. L'unité 55 recalcule en permanence la position d'équilibre, désignée par $Z_o$ (position dans laquelle l'effort du ressort 4 compense exactement la charge statique de la caisse), par exemple en moyennant la valeur Z sur une période de temps relativement longue (par exemple de l'ordre de 10 secondes). A partir des informations $Z_{im}$ et $Z_o$, on peut en déduire immédiatement l'écart Z par rapport à la position d'équilibre, et on peut calculer l'effort F à appliquer, ce qui permet de connaître immédiatement le courant à injecter dans le moteur 52. L'unité 55 recalcule en permanence ledit effort F à exercer, selon une période d'échantillonnage prédéterminée (par exemple toutes les 2 millisecondes). Au cours des recalculs successifs, l'unité 55 introduit la relaxation de l'effort, ce qui peut se faire par différentes méthodes, pourvu que cela aboutisse à diminuer progressivement la part de l'effort résultant d'une perturbation antérieure.

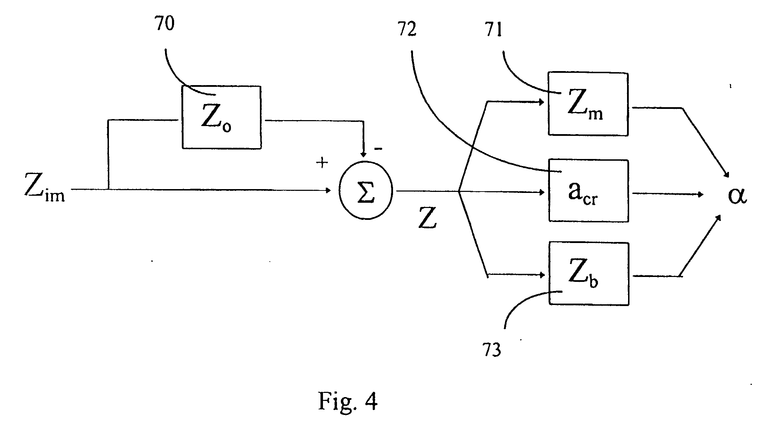

Une méthode particulière est décrite ci-dessous, le lecteur étant invité à consulter la figure 4 qui illustre un aspect de cette méthode particulière. A la partie gauche de la figure 4, on voit en entrée la variable $Z_{im}$ obtenue à partir de la mesure par les capteurs intégrés au moteur (position instantanée $Z_{im}$). Le bloc fonction 70 calcule la position d'équilibre $Z_o$ (comme indiqué ci-dessus). Par comparaison de $Z_{im}$ et $Z_o$, on obtient la vanable Z (écart par rapport à la position d'équilibre antérieure).

Pour relaxer l'effort du vérin, on peut faire en sorte que les moyens de pilotage dont il a été question ci-dessus introduisent une atténuation du suivi de ladite variation de la distance par le vérin électrique 5. Cette atténuation du suivi peut prendre la forme de la création d'une fonction amortissement. Le pilotage en suiveur de profil est moins pur. Le vérin adopte, partiellement et progressivement, un comportement en amortisseur. Cependant, et contrairement à une suspension passive classique, au premier abord, aucun amortissement ne s'oppose au mouvement de la suspension, bien au contraire puisque le vérin électrique va même jusqu'à gommer la réaction du ressort lui-même.

Il s'agit donc de piloter le vérin électrique pour qu'il ne fonctionne pas en suiveur de profil pur, c'est à dire pour que le suivi des variations de distance entre roue et châssis soit moins fidèle. On crée ainsi un paramètre de réglage appelé α, qu'il est possible de piloter en temps réel : le vérin électrique suit les variations de distance aussi exactement que possible, ou ne les suit que partiellement, voire s'y oppose. Le pilotage du vérin électrique règle en temps réel ledit paramètre pour optimiser le confort du véhicule.

Ainsi, par exemple, en négligeant encore l'inertie des masses non suspendues, l'effort F développé par le vérin électrique peut être piloté en respectant la loi suivante :

$$F = [\alpha.K.Z]-[(1 - \alpha).C.\frac{dZ}{dt}]$$

avec K la raideur du ressort, Z la variation de la distance entre point suspendu et non suspendu, C le coefficient d'amortissement, et α le paramètre de réglage pour ajuster la suspension entre un comportement en suiveur de ressort pur ($\alpha=1$) et un comportement en amortisseur pur ($\alpha=0$). Le paramètre α prend des valeurs inférieures à 1 pendant la phase de relaxation. Ces valeurs sont ajustées en temps réel, en fonction de la constante de temps souhaitée pour la relaxation. En fin de relaxation, le paramètre α revient à la valeur 1 et est prêt à répondre en suiveur de profil pur à une nouvelle sollicitation de la route.

La figure 4 illustre le calcul en temps réel du paramètre α. A partir de la variable Z (écart par rapport à la position d'équilibre antérieure), on effectue un ou plusieurs traitements qui permettent d'agir sur le paramètre α.

L'un de ces traitements concerne la relaxation. Pour illustrer comment ladite relaxation est mise en oeuvre dans l'exemple décrit, examinons le cas d'une variation de la charge statique d'un véhicule, alors que le pilotage de la suspension est en service (par exemple, un passager supplémentaire monte dans le véhicule, moteur tournant). A partir de la variable Z, une unité 71 calcule une valeur moyenne $Z_m$ que prend Z sur une période de temps prédéterminée bien inférieure à ladite constante de temps, par exemple de l'ordre de la seconde, et si l'unité 71 constate que $Z_m$ s'éloigne d'une valeur nulle, l'unité 71 donne à α une valeur inférieure à 1, ici de préférence faiblement inféneure à 1, jusqu'à annuler l'effort du vérin 5.

Dès lors, la valeur instantanée du paramètre α est une fonction choisie et prédéterminée de l'éloignement de la position d'équilibre dans laquelle le ressort 4 supporte seul la charge statique supportée par le dispositif de suspension. Le choix de la fonction permet de régler le comportement de la suspension.

D'après ce qui vient d'être exposé, la suspension n'apporte pas de correction de hauteur de caisse réagissant à la charge transportée par le véhicule. Pour apporter une correction de hauteur, il faut accepter de consommer en permanence de l'énergie pour que la fraction de la charge excédant le poids mort du véhicule soit supportée par le vérin électrique, ce qui n'est pas incompatible avec le principe selon l'invention. Il parait cependant préférable de se passer de correction de hauteur, ou de réserver la fonction correction de hauteur à un autre dispositif que ledit vérin électrique, cet autre dispositif agissant avec une grande constante de temps, et ne consommant de l'énergie que pendant la phase de correction.

Remarquons cependant que, grâce au principe de l'invention, on peut choisir un ressort de raideur K assez grande sans préjudice pour le confort, car le vérin électrique empêche le ressort de répercuter brutalement sur la caisse une accélération verticale provoquée au niveau de la roue. Dès lors, on peut choisir un ressort de raideur suffisamment grande pour que l'affaissement du véhicule sous l'effet de sa charge maximale admissible reste faible. L'invention permet donc de concilier un grand confort de suspension avec un faible affaissement de la caisse, chose que l'on ne savait pas faire jusqu'à présent sans introduire de correcteur de hauteur.

Ce principe de pilotage de la suspension convient tout particulièrement bien aux pneus de grande raideur propre, par exemple aux pneus de rapport H/B très faible. L'homme de l'art sait que l'on désigne ainsi des pneus à taille basse, c'est à dire des pneus dont la hauteur H de flanc est assez faible, en regard de leur largeur B. On sait que ces pneus sont volontiers choisis notamment pour conférer au véhicule un caractère sportif très marqué, et qu'ils sont plutôt pénalisants quant au confort. Or c'est un avantage intéressant de la présente invention que de permettre d'utiliser de tels pneus de rapport H/B très faible tout en apportant un très grand confort par le pilotage qui vient d'être expliqué.

On sait aussi que, dans certains cas, par exemple pour des pneus très souples, de grande hauteur de flanc, l'aptitude du pneu à amortir ses propres vibrations peut être insuffisante, d'où un risque bien connu de rebond dû au pneu. C'est d'ailleurs le rôle de l'amortisseur classique d'atténuer le rebond pour éviter de faire perdre au pneu le contact avec le sol (empêcher l'entretien des rebonds dus au pneu).

L'invention propose de traiter ce phénomène de la façon suivante. On sait que l'entretien des rebonds du pneu (ou de ce qui en prend la place dans la liaison au sol) se caractérise par une vibration de fréquence de résonance fonction de la raideur et de la masse de la partie non suspendue. Compte tenu que l'inertie des masses non suspendues est toujours très faible par rapport à l'inertie de la masse suspendue, on peut considérer que la caisse est immobile à ou autour de ladite fréquence de résonance. On peut considérer que les variations de Z à ou autour de ladite fréquence de résonance sont dues à la survenance d'une résonance du pneu. Dès lors, on peut considérer que l'amplitude "$a_{cr}$"

de l'accélération du centre roue est l'image de l'amplitude des rebonds du pneu (résonance du pneu).

Une unité de traitement 72 effectue la dérivée seconde du signal Z par rapport au temps pour obtenir $a_{cr}$, ce qui est un estimateur du débattement du pneu. Par ailleurs, la connaissance de la masse non suspendue et de la raideur du pneu permet d'établir des valeurs de référence préfixées qui permette de décider ce qui est normal, ce qui acceptable et ce qui n'est l'est pas pour $a_{cr}$. Par exemple, on ne peut pas accepter que le pneumatique fléchisse au delà d'une certaine limite. La comparaison de l'amplitude $a_{cr}$ avec lesdites valeurs de références permet de donner rapidement à $\alpha$ une valeur suffisamment inférieure à 1 (par exemple selon une loi de variation linéaire en fonction de l'amplitude) pour amortir rapidement les vibrations de la masse non suspendue, et revenir à une valeur de 1 lorsque ladite amplitude revient à une valeur acceptable.

La valeur instantanée du paramètre $\alpha$ est ainsi fonction de la détection de l'entrée en résonance du pneu, le pilotage permettant ainsi de préserver toujours le contact avec le sol et d'assurer un haut niveau de sécurité.

On sait aussi que, dans le cas de suspensions très souples conçues pour favoriser le confort, on subit en général un roulis et un tangage importants qui amènent les suspensions très souvent dans une zone de fonctionnement proche d'une butée de débattement. Dans l'art antérieur, on lutte contre ces phénomènes indésirables en agissant sur les épures de suspension et en utilisant des barres antiroulis.

Dans le cas de la suspension selon l'invention, pour éviter de se déplacer vers des plages de fonctionnement trop proches d'une butée de débattement, on peut aussi, et ceci constitue un aspect optionnel supplémentaire du traitement, atténuer la réaction d'accompagnement du vérin électrique telle qu'expliquée ci-dessus en agissant sur le paramètre $\alpha$ si l'on observe que le débattement de la suspension se rapproche d'une butée. Une unité de traitement 73 observe l'approche des butées et fait varier la valeur instantanée du paramètre $\alpha$ pour le fixer à une valeur d'autant plus proche de 0 que le dispositif de suspension se déplace vers des plages de fonctionnement de plus en plus proches d'une butée de débattement, avec retour à une valeur de 1 lorsqu'on s'éloigne des butées. Notons que cette option peut être mise en oeuvre avec un capteur supplémentaire d'approche des butées. Ou bien, à partir d'une évaluation approchée basée seulement sur l'analyse de Z, et compte tenu de la course de suspension connue, on peut obtenir un signal $Z_b$ représentatif de l'approche des butées. Bien qu'il y ait dans ce cas une erreur de zéro, cette approche simplifiée s'avère suffisante lorsque la raideur du ressort est élevée (faible affaissement sous charge, voir les considérations relatives à la variation de hauteur sous l'effet de la charge statique).

Ainsi, il peut exister des phases de fonctionnement pendant lesquelles l'effort développé par le vérin électrique 5 est dans la direction opposée à son mouvement. Bien qu'un tel fonctionnement s'apparente à un amortissement, c'est le pilotage qui détermine en temps réel la part d'amortissement souhaitable par le choix de la valeur du paramètre $\alpha$ comme expliqué ci-dessus. Ce pilotage dépend des conditions de fonctionnement de la suspension telles qu'elles sont imposées par le roulage du véhicule. Il ne dépend pas d'un paramètre intrinsèque de la suspension, comme par exemple une différentiation entre une phase de compression et une phase de détente.

En raison de l'introduction d'un vérin électrique qui participe activement au comportement de la suspension, on ne peut plus distinguer isolément un ressort et un amortisseur. On a déjà exposé plus haut (voir paragraphe traitant de la correction de hauteur) que la souplesse de la suspension qui sera perçue dans la caisse du véhicule n'a pas de lien unique avec la raideur K du ressort. De même, la part d'amortissement dépend du pilotage du vérin électrique. Le vérin électrique est un actionneur mis en parallèle avec le ressort, et dont le pilotage en temps réel détermine à tout instant les caractéristiques de suspension.

Le pilotage individuel de chaque roue 2 assuré par l'unité de pilotage 55 dont le fonctionnement a été expliqué ci-dessus est capable à lui seul de procurer une suspension confortable et sûre à un véhicule. Cependant, en option, on peut ajouter d'autres niveaux de pilotage, de sorte que l'unité 55 peut éventuellement faire partie d'une régulation plus sophistiquée liant le comportement des suspensions des différentes roues entre elles, pour par exemple ajouter une correction du roulis et/ou tangage du véhicule. Dans ce cas, on peut utiliser des capteurs 60, 61, 62 extérieurs aux vérins électriques 5 de chaque roue, comme par exemple des accéléromètres liés à la caisse, ou bien encore on peut utiliser des stratégies de pilotage observant les actions du pilote du véhicule, telles que celles permettant d'anticiper par rapport aux mouvements de caisse. Les moyens de calcul requis sont disposés dans une centrale 6 de commande, qui échange des informations avec les unités 55 via des lignes 65. Cela conduit à agir sur le moyen de pilotage individuel de chaque roue pour modifier l'effort que développe le vérin électrique par rapport à ce qui est calculé par le pilotage individuel de chaque roue.

Signalons enfin que, bien entendu, il est souhaitable que chaque vérin électrique puisse fonctionner en mode dégradé, en cas de panne de l'une ou l'autre des unités 55 et/ou de la centrale 6. On connecte dans ce cas les bornes d'alimentation de l'induit du moteur 52 par exemple en court circuit ou sur une résistance de dissipation adéquate, ce qui fait fonctionner le moteur 52 en générateur, avec dissipation d'énergie par effet joule dû à la circulation d'un courant. Dans ce cas, la suspension devient purement passive.

## Revendications

**1.** Méthode de contrôle du débattement entre un point suspendu et un point non suspendu, d'un dispositif de suspension comportant une liaison élastique (1) montée entre lesdits points suspendu et non suspendu, ladite liaison élastique (1) comprenant un ressort (4) et comportant un vérin électrique (5) réversible, agissant en parallèle du ressort (4), ladite liaison élastique ayant une distance de base entre ledit point suspendu et ledit point non suspendu pour laquelle ledit ressort compense exactement la charge statique agissant sur le dispositif de suspension, ladite méthode comportant un calcul du courant à appliquer audit vérin électrique (5) selon une période d'échantillonnage prédéterminée pour contrôler le débattement entre lesdits points suspendu et non suspendu, **caractérisée en ce que**, à partir d'une variation observée de la distance entre lesdits points suspendu et non suspendu causée par un déplacement du point suspendu par rapport au point non suspendu, quel que soit le sens du déplacement, le courant calculé est tel que le vérin électrique (5) développe un effort orienté comme le déplacement, l'amplitude dudit effort:

- étant une fonction de la variation de ladite distance de base,
- et étant progressivement réduite de façon à annuler ledit effort en un certain nombre de périodes d'échantillonage représentative d'une période de temps de relaxation.

**2.** Méthode de contrôle selon la revendication 1 dans laquelle, en appelant K la valeur instantanée de la raideur du ressort et Z la variation de la distance entre point suspendu et non suspendu, le courant calculé est tel que le vérin développe un effort F = K.Z.

**3.** Méthode de contrôle selon l'une des revendications 1 ou 2, dans laquelle la fonction de la variation de ladite distance de base est telle qu'elle introduit une atténuation du suivi de ladite variation de distance par le vérin électrique (5).

**4.** Méthode de contrôle selon l'une des revendications 1 à 3 dans laquelle, $\alpha$ étant un paramètre d'atténuation compris entre 0 et 1, l'effort développé par le vérin vaut F = $[\alpha.K.Z]$ - $[(1 - \alpha).C. \frac{dZ}{dt}]$ avec C étant un coefficient d'amortissement.

**5.** Méthode de contrôle selon la revendication 4 dans lequel la valeur instantanée du paramètre $\alpha$ est fonction de la détection de l'entrée en résonance du pneu.

**6.** Méthode de contrôle selon la revendication 4 dans laquelle la valeur instantanée du paramètre $\alpha$ est fonction de l'éloignement de la position d'équilibre dans laquelle le ressort (4) supporte seul la charge statique supportée par le dispositif de suspension, et est d'autant plus proche de 0 que le dispositif de suspension se déplace vers des plages de fonctionnement proches d'une butée de débattement.

**7.** Méthode de contrôle selon la revendication 4 dans laquelle la valeur instantanée du paramètre $\alpha$ est fonction de la constante de temps souhaitée pour la relaxation de l'effort du vérin.

**8.** Méthode de contrôle selon l'une des revendications 1 à 7, utilisée pour contrôler un dispositif dans lequel le vérin électrique (5) comporte un moteur électrique (52) de type synchrone auto piloté, à aimants permanents, dans laquelle la variation de la position relative entre point suspendu et point non suspendu est déterminée entièrement à partir d'une mesure de la variation de position délivrée par les capteurs intégrés au moteur électrique.

**9.** Méthode de contrôle selon l'une des revendications 1 à 8, utilisée pour un dispositif de suspension verticale entre une roue (2) d'un véhicule et le châssis auquel la roue est reliée, le dispositif de suspension comportant une liaison élastique (1) montée entre un point suspendu et un point non suspendu, ladite liaison élastique (1) comprenant un ressort (4) et comportant un vérin électrique (5) réversible, agissant en parallèle du ressort (4), ladite liaison élastique ayant une distance de base entre ledit point suspendu et ledit point non suspendu pour laquelle ledit ressort compense exactement la charge statique agissant sur le dispositif de suspension.

**10.** Système de suspension d'un véhicule comportant une pluralité de roues reliées au châssis par un dispositif de suspension comportant une liaison élastique (1) montée entre un point suspendu et un point non suspendu, ladite liaison élastique (1) comprenant un ressort (4) et comportant un vérin électrique (5) réversible, agissant en parallèle du ressort (4), ladite liaison élastique ayant une distance de base entre ledit point suspendu et ledit point non suspendu pour laquelle ledit ressort compense exactement la charge statique agissant sur le dispositif de suspension contrôlé selon une méthode selon l'une des revendications 1 à 8, comportant un niveau de pilotage global des suspensions qui, à partir d'informations estimant l'attitude du véhicule, agit sur le moyen de pilotage individuel de chaque roue pour modifier l'effort que développe le vérin (5) électrique par rapport à ce qui est déterminé par les moyens de pilotage individuel de chaque roue.

**Patentansprüche**

1. Verfahren der Steuerung des Durchfederns zwischen einem aufgehängten und einem nicht aufgehängten Punkt einer Aufhängungsvorrichtung, die eine elastische Verbindung (1) aufweist, die zwischen dem aufgehängten und nicht aufgehängten Punkt angebracht ist, wobei die genannte elastische Verbindung (1) eine Feder (4) aufweist und einen umkehrbaren elektrischen Stellantrieb (5) aufweist, der parallel zur Feder (4) wirksam ist, wobei die genannte elastische Verbindung eine Grunddistanz zwischen dem genannten aufgehängten Punkt und dem genannten nicht aufgehängten Punkt aufweist, für die die genannte Feder genau die statische Last kompensiert, die auf die Aufhängungsvorrichtung einwirkt, und wobei die genannte Vorrichtung das Errechnen des Stromes umfaßt, der an den genannten elektrischen Stellantrieb (5) in einer bestimmten Probenperiode anzulegen ist, um das Rückfedern des genannten aufgehängten und nicht aufgehängten Punktes zu steuern, **dadurch gekennzeichnet, daß**, ausgehend von einer beobachteten Veränderung der Distanz zwischen dem aufgehängten und dem nicht aufgehängten Punkt, die durch eine Versetzung des aufgehängten Punktes bezüglich des nicht aufgehängten Punktes verursacht ist, gleichgültig, wie die Richtung der Versetzung auch sein mag, der errechnete Strom so ist, daß der elektrische Stellantrieb (5) eine Kraft entwickelt, die gerichtet ist wie die Versetzung, wobei die Amplitude der genannten Kraft:

   • eine Funktion der Veränderung der genannten Grunddistanz ist, und

   • fortlaufend derart verringert wird, daß die genannte Kraft in einer gewissen Anzahl von Probenperioden aufgehoben wird, die repräsentativ für eine Entspannungszeitperiode ist.

2. Steuerverfahren nach Anspruch 1, worin, indem man K den momentanen Wert der Steifigkeit der Feder und Z die Veränderung der Distanz zwischen dem aufgehängten Punkt und dem nicht aufgehängten Punkt nennt, der errechnete Strom so ist, daß der Stellantrieb eine Kraft F = K.Z entwickelt.

3. Steuerverfahren nach einem der Ansprüche 1 oder 2, worin die genannte Funktion der Veränderung der genannten Grunddistanz so ist, daß sie eine Abschwächung der Fortsetzung der genannten Distanzänderung durch den elektrischen Stellantrieb (5) einbringt.

4. Steuerverfahren nach einem der Ansprüche 1 bis 3, worin bei einem Abschwächungsparameter $\alpha$, der zwischen 0 und 1 liegt, die Kraft, die vom Stellantrieb entwickelt wird, F = [$\alpha$.K.Z]-[(1-$\alpha$).C.dZ/dt]

beträgt, wobei C ein Dämpfungsbeiwert ist.

5. Steuerverfahren nach Anspruch 4, worin der momentane Wert des Parameters $\alpha$ eine Funktion des Erfassens des Eintritts des Reifens in Resonanz ist.

6. Steuerverfahren nach Anspruch 4, worin der momentane Wert des Parameters $\alpha$ eine Funktion der Entfernung der Gleichgewichtslage ist, in welcher die Feder (4) alleine die statische Last trägt, die von der Aufhängungsvorrichtung getragen wird, und um so an näher 0 liegt, wie die Aufhängungsvorrichtung sich zu den Funktionsbereichen nahe einem Durchfederungsanschlag versetzt.

7. Steuerverfahren nach Anspruch 4, worin der momentane Wert des Parameters $\alpha$ eine Funktion der angestrebten Zeitkonstante für die Kraftentspannung des Stellantriebs ist.

8. Steuerverfahren nach einem der Ansprüche 1 bis 7, das verwendet wird, um eine Vorrichtung zu steuern, in der der elektrische Stellantrieb (5) einen selbstgesteuerten Synchron-Elektromotor (52) mit Permanentmagneten aufweist, worin die Veränderung der Relativlage zwischen dem aufgehängten Punkt und dem nicht aufgehängten Punkt gänzlich aus einer Messung der Veränderung der Lage bestimmt wird, die vom Meßfühlern geliefert wird, die in den Elektromotor integriert sind.

9. Steuerverfahren nach einem der Ansprüche 1 bis 8, verwendet für eine Vertikal-Aufhängungsvorrichtung zwischen einem Rad (2) eines Fahrzeugs und dem Fahrgestell, mit dem das Rad verbunden ist, wobei die Aufhängungsvorrichtung eine elastische Verbindung (1) aufweist, die zwischen einem aufgehängten Punkt und einem nicht aufgehängten Punkt angebracht ist, die genannte elastische Verbindung (1) eine Feder (4) aufweist und einen umkehrbaren elektrischen Stellantrieb (5) aufweist, der parallel zur Feder (4) wirksam ist, und die genannte elastische Verbindung eine Grunddistanz zwischen dem genannten aufgehängten Punkt und dem genannten nicht aufgehängten Punkt aufweist, für die die genannte Feder genau die statische Last kompensiert, die auf die Aufhängungsvorrichtung einwirkt.

10. Aufhängungssystem für ein Fahrzeug, das eine Vielzahl von Rädern aufweist, die mit dem Fahrgestell durch eine Aufhängungsvorrichtung verbunden sind, die eine elastische Verbindung (1) aufweist, die zwischen einem aufgehängten Punkt und einem nicht aufgehängten Punkt angebracht ist, die genannte elastische Verbindung (1) eine Feder (4) aufweist und einen umkehrbaren elektrischen Stellantrieb (5) aufweist, der parallel zur Feder (4) wirksam ist, und die genannte elastische Verbindung eine Grunddistanz zwischen dem genannten aufgehängten Punkt und dem genannten nicht aufgehängten Punkt aufweist, für die die genannte Feder genau die statische Last kompensiert, die auf die Aufhängungsvorrichtung einwirkt, und das nach einem Verfahren gemäß einem der Ansprüche 1 bis 8 gesteuert wird, mit einem globalen Steuerungsniveau der Aufhängungen, die aus Informationen, die das Verhalten des Fahrzeugs abschätzen, auf das individuelle Steuerungsmittel eines jeden Rades einwirkt, um die Kraft, die der elektrische Stellantrieb (5) entwickelt, in Bezug darauf zu modifizieren, was durch die individuellen Steuerungsmittel eines jeden Rades bestimmt ist.

## Claims

1. A method for controlling the range of motion between a suspended point and a non-suspended point, of a suspension device comprising an elastic link (1) mounted between said suspended and non-suspended points, said elastic link (1) comprising a spring (4) and a reversible electric jack (5) acting parallel to the spring (4), said elastic link having a base distance between said suspended and non-suspended points for which said spring exactly compensates for the static load acting on the suspension device, said method comprising calculation of the current to be applied to said electric jack (5) according to a predetermined sampling period to control the range of motion between said suspended and non-suspended points, **characterised in that**, starting from an observed variation in the distance between said suspended and non-suspended points caused by displacement of the suspended point relative to the non-suspended point, whatever the direction of displacement, the calculated current is such that the electric jack (5) develops a force oriented in the same direction as the displacement, the amplitude of said force:

   • being a function of the variation in said base distance,
   • and being gradually reduced so as to cancel out said force within a certain number of sampling periods representative of a relaxation time.

2. A control method according to Claim 1, in which, letting K be the instantaneous value of the stiffness of the spring and Z the variation in the distance between the suspended and non-suspended points, the current calculated is such that the electric jack develops a force F = K.Z.

3. A control method according to one of Claims 1 or 2, in which the function of the variation of said base distance is such that it introduces attenuation of the following of said variation in distance by the electric jack (5).

4. A control method according to one of Claims 1 to 3, in which, $\alpha$ being an attenuation parameter of between 0 and 1, the force developed by the jack F = $[\alpha.\text{K}.\text{Z}]-[(1 - \alpha).\text{C}.\text{dZ/dt}]$ with C being a damping coefficient.

5. A control method according to Claim 4, in which the instantaneous value of the parameter $\alpha$ is a function of the detection of the beginning of resonance of the tyre.

6. A control method according to Claim 4, in which the instantaneous value of the parameter $\alpha$ is a function of the distance from the equilibrium position in which the spring (4) supports by itself the static load supported by the suspension device, and is all the closer to 0 the more the suspension device is displaced towards operating ranges close to a limit of the range of motion.

7. A control method according to Claim 4, in which the instantaneous value of parameter $\alpha$ is a function of the time constant desired for the relaxation of the force of the jack.

8. A control method according to one of Claims 1 to 7, used for controlling a device in which the electric jack (5) comprises an electric motor (52) of the synchronous auto-controlled type comprising permanent magnets, in which the variation in the relative position between the suspended point and the non-suspended point is determined entirely from a measurement of the variation in position delivered by the sensors integrated in the electric motor.

9. A control method according to one of Claims 1 to 8, used for a device for the vertical suspension between a wheel (2) and the chassis to which the wheel is connected, the suspension device comprising an elastic link (1) mounted between a suspended point and a non-suspended point, said elastic link (1) comprising a spring (4) and a reversible electric jack (5), acting parallel to the spring (4), said elastic link having a base distance between said suspended point and said non-suspended point for which said spring exactly compensates the static load acting on the suspension device.

10. A suspension system for a vehicle comprising a plurality of wheels connected to the chassis by a suspension device comprising an elastic link (1) mounted between a suspended point and a non-suspended point, said elastic link (1) comprising a spring (4) and a reversible electric jack (5), acting parallel to the spring (4), said elastic link having a base distance between said suspended point and said non-suspended point for which said spring exactly compensates the static load acting on the suspension device, controlled using a method according to one of Claims 1 to 8, comprising an overall level of suspension control which, based on information estimating the attitude of the vehicle, acts on the individual control means for each wheel to modify the force developed by the electric jack (5) with respect to what is determined by the individual control means of each wheel.

Fig. 1

Fig 2a

Fig 2b

Fig 2c

Fig 3a

Fig 3b

Fig 3c

Fig. 4